# EUROPÄISCHE PATENTSCHRIFT

(11) **EP 1 561 198 B1**
(45) Veröffentlichungstag und Bekanntmachung des Hinweises auf die Patenterteilung: **25.03.2009**
(21) Anmeldenummer: 03779903.8
(22) Anmeldetag: 12.11.2003
(51) Int. Cl.: G09F 3/02

(54) **GEGENSTAND MIT INDIVIDUELLEM KENNZEICHNUNGSMITTEL ZUR IDENTIFIZIERUNG SOWIE VERFAHREN UND EINRICHTUNGEN ZUR KENNZEICHNUNG UND IDENTIFIZIERUNG VON GEGENSTÄNDEN, INSBESONDERE VERPACKUNGEN, ETIKETTEN ODER DERGLEICHEN**
OBJECT PROVIDED WITH AN INDIVIDUAL CHARACTERIZING SYSTEM ENABLING ITS IDENTIFICATION, AND METHODS AND DEVICES FOR CHARACTERIZING AND IDENTIFYING OBJECTS, IN PARTICULAR PACKAGES, LABELS OR THE LIKE
OBJET DOTE D'UN SYSTEME DE CARACTERISATION INDIVIDUEL QUI PERMET SON IDENTIFICATION, ET PROCEDES ET DISPOSITIFS POUR CARACTERISER ET IDENTIFIER DES OBJETS, NOTAMMENT DES EMBALLAGES, DES ETIQUETTES OU ANALOGUES

(30) Priorität: 12.11.2002 EP 02090376
(43) Veröffentlichungstag der Anmeldung: 10.08.2005
(73) Patentinhaber: Hauni Maschinenbau AG, 21033 Hamburg (DE)
(72) Erfinder: GOSEBRUCH, Harald, 27283 Verden (DE); OVERATH, Matthias, 21035 Hamburg (DE); DRABNER, Wolfgang, 21521 Wohltorf (DE); VON BISMARCK, Gottfried, 22299 Hamburg (DE)
(74) Vertreter: Wenzel & Kalkoff
(86) Internationale Anmeldenummer: PCT/EP2003/012653
(87) Internationale Veröffentlichungsnummer: WO 2004/044870

(56) Entgegenhaltungen:
- GB-A- 1 448 153
- GB-A- 2 324 065
- US-A1- 2001 010 332

## Beschreibung

Die Erfindung betrifft einen Gegenstand, der mit einem individuellen Kennzeichnungsmittel zur Identifizierung versehen ist, wobei das Kennzeichnungsmittel ein dem Gegenstand eigenes Zufalls-Kennmittel ist. Des weiteren betrifft die Erfindung Verfahren zur individuellen Kennzeichnung von Gegenständen, insbesondere Verpackungen mit einem individuellen Kennzeichnungsmittel sowie zur Identifizierung von mit einem individuellen Kennzeichnungsmittel versehenen Gegenständen, insbesondere Verpackungen durch Erfassen und Auswerten des Kennzeichnungsmittels. Die Erfindung betrifft weiterhin Einrichtungen zur individuellen Kennzeichnung von Gegenständen, insbesondere Verpackungen mit einem individuellen Kennzeichnungsmittel sowie zur Identifizierung von mit einem individuellen Kennzeichnungsmittel versehenen Gegenständen, insbesondere Verpackungen.

Gegenstände, insbesondere Verpackungen sind häufig mit einem individuellen Kennzeichnungsmittel versehen. Das Kennzeichnungsmittel dient insbesondere zur Identifizierung des Gegenstandes bzw. der Verpackung auf Echtheit und Herkunft. Die Identifizierung ist in vielen Fällen von Bedeutung, um z.B. zum einen gefälschte Ware bzw. gefälschte Produkte in Originalverpackungen zu erkennen und zum anderen Vertriebswege überwachen zu können. Die Kennzeichnung und Identifizierung gerade von Verpackungen hat in vielen unterschiedlichen Bereichen eine besondere Bedeutung. Insbesondere in der Zigarettenindustrie sowie der pharmazeutischen und kosmetischen Industrie führen Fälschungen zu erheblichen finanziellen Verlusten für die Herstellungsunternehmen sowie unter Umständen sogar zu einer Gesundheitsgefährdung der Verbraucher.

Es ist daher bekannt und üblich, Verpackungen mit diversen Kennzeichnungen bzw. Sicherungssystemen zu versehen, um eine Identifizierung und damit eine Zuordnung zum autorisierten Hersteller bzw. eine Kontrolle der Vertriebswege zu ermöglichen. Die Kennzeichnung kann zum Beispiel durch Aufbringen eines Codes auf die Verpackung erfolgen. Der Code kann z.B. aus verschlüsselten oder unverschlüsselten Elementen, z.B. Zahlen, Buchstaben oder anderen Elementen bestehen. Barcodes, Hologramme und Speichermedien, wie z.B. Magnetstreifen, Speicherchips oder dergleichen sind nur einige der bekannten Kennzeichnungsmöglichkeiten. US-A1-2001/010332 betrifft ein Kennmittel, das eine vor dem Aufbringen auf den Gegenstand definierte oder ausgewählte Information ist. Aus der US- 5,602,381 ist ein entsprechender Gegenstand bekannt.

Allen bisherigen Verpackungen sowie Verfahren und Einrichtungen zur Kennzeichnung und Identifizierung der Verpackungen ist jedoch der Nachteil gemein, daß sie zum einen aufwendig in der Herstellung und Handhabung sind und zum anderen keine ausreichende Sicherheit gegen Nachahmung bieten. Eine eindeutige und zweifelsfreie Kennzeichnung bzw. Identifizierung ist nicht möglich. Es können ohne weiteres Verpackungen in Umlauf gebracht werden, deren originale Herkunft nicht belegt werden kann, da die bekannten Verfahren und Einrichtungen manipulierbar sind, indem Kennzeichnungen, wie z.B. Barcodes, umgangen, nachgeahmt bzw. gefälscht werden können. Sämtliche bekannte Verpackungen werden durch Aufbringen üblicherweise zuvor definierter Kennzeichnungsmittel gekennzeichnet. Damit ist zum einen der Aufwand der Kennzeichnung hoch, was mit steigernder Sicherheitsstufe zu steigenden Kosten bei der Herstellung führt. Zum anderen ist auch für die Identifizierung ein erheblicher Aufwand erforderlich.

Es ist daher Aufgabe der vorliegenden Erfindung, einen einfach zu kennzeichnenden und zu identifizierenden und besonders fälschungssicheren Gegenstand vorzuschlagen. Des weiteren ist es Aufgabe der Erfindung, Verfahren zur Kennzeichnung und Identifizierung von Gegenständen, insbesondere Verpackungen vorzuschlagen, die einfach und kostengünstig sind und eine besonders hohe Fälschungssicherheit gewährleisten. Eine weitere Aufgabe der Erfindung besteht darin, Einrichtungen zur Kennzeichnung und Identifizierung von Gegenständen, insbesondere von Verpackungen zu schaffen, die kostengünstig, einfach handhabbar und sicher sind.

Die Aufgabe wird zum einen durch einen Gegenstand der eingangs genannten Art dadurch gelöst, daß das Zufalls-Kennmittel aus wenigstens einem aus einer Verteilung von Luminophoren gebildeten Zufallsmuster gebildet ist. Bevorzugt ist der Gegenstand eine Verpackung. Dadurch wird die Fälschungssicherheit gegenüber bekannten Verpackungen erhöht, da zufällige Kennmittel zum einen gegenüber definierten Kennmitteln schwerer nachzuahmen bzw. zu fälschen sind. Zum anderen wird dadurch, daß das Zufulls-Kennmittel der jeweiligen Verpackung eigen ist, ein besonders wirkungsvolles und eindeutiges und ohnehin an der Verpackung vorhandenes Kennzeichnungsmittel geschaffen. Herstellungsbedingt gleicht keine Verpackung der anderen, so daß ohne zusätzlichen Aufwand allein durch die eigentliche Herstellung der Verpackung bedingt ein zufälliges und einmaliges und damit besonders schwer zu fälschendes Kennzeichnungsmittel geschaffen ist. Mit anderen Worten ist jede Verpackung ihr eigenes individuelles Kennzeichnungsmittel. Vorteilhafterweise ist das Zufalls-Kennmittel aus wenigstens einem Zufallsmuster gebildet, wobei das Zufallsmuster aus einer Verteilung von Luminophoren gebildet ist. Diese erfindungsgemäß technologische Fülschungshürde ermöglicht eine sichere und besonders leicht zufällig an-, auf- und/oder einbringbare Kennzeichnung und Identifizierung der Verpackung, die damit sehr fälschungssicher und einfach, insbesondere maschinell lesbar, zuzuordnen ist. Diese Ausbildung der Verpackung hat den besonderen Vorteil, daß das Zufalls-Kennmittel unter normalen Bedingungen unsichtbar ist und erst durch eine spezielle Behandlung sichtbar zu machen ist, wodurch eine zusätzliche Hürde bei der Fälschung existiert. Im übrigen kann somit auf eine visuelle Beeinträchtigung der Verpackung verzichtet werden.

In einer vorteilhaften Weiterbildung der Erfindung ist das Zufalls-Kennmittel Bestandteil der Ausbildung der Verpackung. Anders als bei bekannten Kennzeichnungmitteln, die vor dem Aufbringen bzw. Anbringen auf die bzw. an die Verpackung ausgewählt werden, ist das erfindungsgemäße Zufalls-Kennmittel erst durch Bildung der Verpackung selbst erzeugt, so daß eine besonders effektive Fälschungssicherheit existiert. Anders als beispielsweise auf die Verpackung aufzubringende Etiketten, die kopiert und auf gefälschte Verpackungen aufgebracht werden können, ist das Zufalls-Kennmittel als Bestandteil der Ausbildung der Verpackung für niemanden vorhersehbar und daher auch nicht zu kopieren.

In einer weiteren bevorzugten Austührungsform der erfindungsgemäßen Verpackung ist zusätzlich zum Zufallsmuster eine aus dem Zufallsmuster generierte Kennung auf der bzw. an der Verpackung angeordnet. Dadurch wird zum einen eine noch höhere Sicherheitsstufe erreicht, da die Kennzeichnung der Verpackung aus verschiedenen Elementen gebildet ist. Zum anderen ist durch die Zuordnung des Zufallsmusters zu der Kennung die Identifizierung vereinfacht, da ein Abgleich bzw. die Identifizierung datenbankfrei erfolgen kann.

Besonders vorteilhaft ist eine Ausbildung der Verpackung, bei der die Verpackung zusätzlich zum Zufallsmuster und/oder der Kennung mit einem Codierungsmittel, insbesondere einer Seriennummer, versehen ist Durch die zusätzliche Seriennummer wird eine weiter erhöhte Sicherheitsstufe erzielt, da sich Zufallsmuster, Kennung und Seriennummer zu einem individuellen Datensatz kombinieren lassen, der nur sehr schwer zu entschlüsseln und damit nachzuahmen ist.

Vorzugsweise ist das Zufalls-Kennmittel integraler Bestandteil der Verpackung selbst, so daß eine einfache Herstellung, nämlich mit geringem bzw. ohne zusätzlichen Aufwand möglich ist und die Kennzeichnung, deren Erkennung und Entschlüssclung für eine Nachahmung bzw. Fälschung üblicherweise erforderlich ist, nicht ohne weiteres als solche der Verpackung anzusehen ist.

Bei einer weiteren bevorzugten Ausführungsform der Verpackung sind das Codierungsmittel und/oder das Kennzeichnungsmittel und/oder die Kennung auf der Primärverpackung und/oder der Sckundärverpackung und/oder der Tertiärverpackung der Verpackung derart angeordnet, daß sie von außen eindeutig identifizierbar sind. Dabei wird unter Primärverpackung der Verpackungstyp verstanden, der direkt mit den verpackten Produkten in Kontakt ist, z.B. Blisterverpackungen. Sekundärverpackungen sind die sogenannten Umverpackungen bzw. Umhüllungen, wie z.B. Faltschachteln. Als Tertiärverpackungen werden Umkartons, Versandkartons, Paletten oder dergleichen verstanden. Durch die wahlweise Anbringung/Aufbringung/Einbringung der Kennzeichen, Codierungen, Kennungen etc. auf einem oder mehreren der genannten Verpackungstypen ist zum Beispiel das sogenannte "Repacking" geschützt, da die Zuordnung der einzelnen Verpackungstypen zueinander eindeutig gewährleistet ist.

Die Aufgabe wird weiterhin durch ein Verfahren zur individuellen Kennzeichnung von Gegenständen, insbesondere Verpackungen durch die Schritte: Kennzeichnen des Gegenstandes mit einem dem Gegenstand eigenen Zufalls-Kennmittel, nämlich einem aus einer Verteilung von Luminophoren gebildeten Zufallsmuster, als Kennzeichungsmittel, Erfassen des dem Gegenstand, insbesondere der Verpackung eigenen Zufallsmusters, Umsetzen des Zufallsmusters in eine individuelle Kennung und Hinterlegen der Kennung als Datensatz in einer Datenbank und/oder als Aufdruck auf dem Gegenstand, insbesondere der Verpackung gelöst Dadurch wird auf überraschend einfache und effektive Weise eine sichere Kennzeichnung von Verpackungen erzielt, da die Aufbringung irgendwelcher Sicherungsmittel, wie z.B. Etiketten, Magnetstreifen oder dergleichen entbehrlich ist. Die Kennzeichnung umfaßt vereinfacht gesprochen lediglich die Aufnahme ohnehin an der Verpackung vorhandener Kennmittel, die für eine spätere Identifizierung noch in eine Kennung umgesetzt und in einer einfachen Form hinterlegt werden müssen. Die erfindungsgemäßen Schritte haben Zum einen den Vorteil, daß das Zufalls-Kennmittel nicht ohne weiteres erkennbar ist. Zum anderen ist die Erfassung und Identifizierung sehr exakt möglich, so daß eine besonders hohe Fälschungssicherheit und Identifizierungsquote erreicht wird. Des weiteren reduziert sich auch der Aufwand bei der Identifizierung, was die Handhabung besonders vereinfacht.

Die Aufgabe wird des weiteren durch ein Verfahren zur Identifizierung von mit einem individuellen Kennzeichnungsmittel versehenen Gegenständen, insbesondere Verpackungen durch Erfassen und Auswerten des Kennzeichnungsmittels, umfassend die Schritte: Erfassen eines dem Gegenstand, insbesondere der Verpackung eigenen Zufalls-Kennmittels als Kennzeichnungsmittel, wobei das Zufalls-Kennmittel durch Bestrahlen mit Licht im ultravioletten Spektralbereich sichtbar gemacht und optisch detektiert wird, Umsetzen des Zufalls-Kennmittels in eine individuelle Kennung und Abgleich der Kennung mit einem Aufdruck der Kennung auf dem Gegenstand, insbesondere der Verpackung und/oder einem in einer Datenbank hinterlegten, die Kennung beinhaltenden Datensatz gelöst. Dadurch ist eine zuverlässige und sichere Erkennung von Originalverpackungen gewährleistet.

Eine Einrichtung zur individuellen Kennzeichnung von Gegenständen, insbesondere Verpackungen mit einem individuellen Kennzeichnungsmittel, die dadurch gekennzeichnet ist, daß ein Mittel zum Erfassen mindestens eines dem Gegenstand, insbesondere der Verpackung eigenen Zufalls-Kennmittels als Kennzeichnungsmittel, ein Mittel zum Generieren und Anzeigen bzw. Ausgeben einer Kennung aus dem Zufalls-Kennmittel sowie ein Mittel zum Hinterlegen der Kennung vorgesehen ist, löst die Aufgabe ebenfalls.

Weiterhin wird die Aufgabe durch eine Einrichtung zur Identifizierung von mit einem individuellen Kennzeichnungsmittel versehenen Verpackungen gelöst, die dadurch gekennzeichnet ist, daß ein Mittel zum Erfassen mindestens eines dem Gegenstand, insbesondere der Verpackung eigenen Zufalls-Kennmittels als Kennzeichnungsmittel sowie ein Mittel zum Generieren und Anzeigen bzw. Ausgeben einer Kennung aus dem Zufalls-Kennmittel vorgesehen ist.

Weitere bevorzugte Ausführungsformen der Verpackung und der Einrichtungen sowie vorteilhafte Verfahrensschritte ergeben sich aus den Unteransprüchen und der Beschreibung. Besonders bevorzugte Beispiele werden anhand der beigefügten Zeichnung näher erläutert. In der Zeichnung zeigt:
Fig. 1 eine perspektivische Darstellung einer Verpackung mit einer Faltschachtel und einer Umhüllung, nämlich einer Zigarettenverpackung mit einer Folienumhüllung, wobei das Zufalls-Kennmittel in einem Teilbereich der Verpackung ausgebildet ist,
Fig. 2 einen Aufreißstreifen der in Figur 1 dargestellten Umhüllung mit einer Seriennummer, einem Barcode, Referenz- bzw. Meßmarken, sowie einem Zufallsmuster,
Fig. 3 den Ausschnitt A gemäß Figur 2 in starker Vergrößerung,
Fig. 4 eine perspektivische Darstellung einer Verpackung mit einer weiteren Ausbildung eines Zufallsmusters sowie einer Seriennummer,
Fig. 5 eine Darstellung einer weiteren Ausbildung eines Zufallsmusters,
Fig. 6 eine perspektivische Darstellung eines Verpackungsteils mit einer Steuerbanderole oder dergleichen, wobei die Steuerbanderole eine weitere Ausbildung des Zufallsmusters darstellt,
Fig. 7 den Ausschnitt B gemäß Figur 6 in starker Vergrößerung,
Fig. 8 eine Umhüllung für Verpackungen, nämlich eine Folie mit einer weiteren Ausbildung eines Zufallsmusters,
Fig. 9 eine perspektivische Darstellung einer Verpackung mit einer weiteren Ausbildung eines Zufallsmusters sowie einer Seriennummer und einer Kennung,
Fig. 10 eine Draufsicht auf eine Verpackung mit einer weiteren Ausbildung eines Zufallsmusters,
Fig. 11 eine weitere Verpackung, nämlich eine Primärverpackung z.B. für Medikamente oder dergleichen, mit einer Einrichtung zur Kennzeichnung und Identifizierung der Verpackung,
Fig. 12 eine weitere Primarverpackung, nämlich ein Siegelrandbeutel.
Fig. 13 eine weitere Primärverpackung, nämlich eine Spritze,
Fig. 14 eine weitere Primärverpackung, nämlich ein Fläschchen oder dergleichen, und
Fig. 15 eine Packungseinheit aus Primärverpackung und Sekundärverpackung mit einer Einrichtung zur Kennzeichnung und Identifizierung der Packungseinheit.

Sämtliche gezeigten Verpackungen sind ausgebildet, um eine genaue Identifizierung der Verpackung zu gewährleisten. Beispielhaft sind Verpackungen für Zigaretten und feste, flüssige und pulverförmige Medikamente gezeigt. Die Erfindung bezieht sich jedoch auf alle Arten von Verpackungen in unterschiedlichen Anwendungsbereichen, insbesondere jedoch auf Verpackungen, in denen hochwertige und besonders oft und umfangreich gefälschte oder manipulierte Produkte verpackt sind, z.B. Verpackungen für elektronische Bauelemente oder kosmetische Produkte. Die Erfindung ist selbstverständlich auf andere Gegenstände, wie z.B. Etiketten, Dokumente oder auch auf Produkte, wie z.B. Ersatzteile anwendbar.

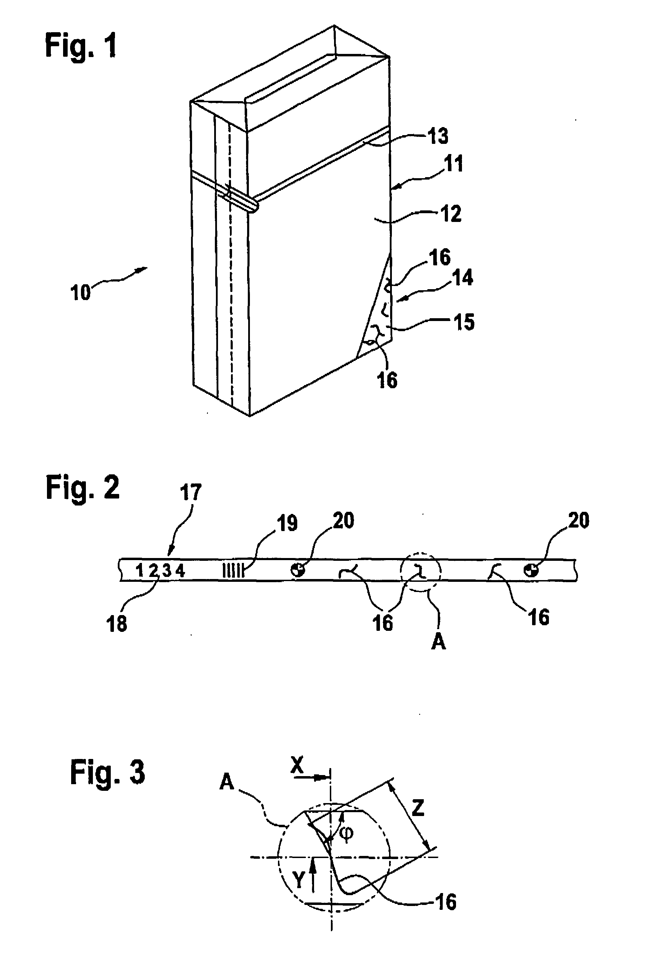

In der Figur 1 ist eine Verpackung 10 für Zigaretten oder dergleichen gezeigt, die aus einer Faltschachtel 11 und einer die Faltschachtel 11 umgebenden Umhüllung 12 gebildet ist. Im Originalzustand der Verpackung 10, also in gefülltern und geschlossenem Zustand, ist die Umhüllung 12 mit einem Aufreißstreifen 13 versehen, der beim Öffnen der Verpackung 10 üblicherweise abgetrennt und zerstört wird. Die Verpackung 10 ist mit einem Kennzeichnungsmittel 14 ausgestattet. Das Kennzeichnungsmittel 14 ist ein der Verpackung 10 eigenes Zufalls-Kennmittel 15, das in einem Teilbereich der Verpackung 10 angeordnet ist. Alternativ können auch mehrere Teilbereiche oder auch die ganze Verpackung 10 mit dem Zufalls-Kennmittel 15 versehen sein.

In der Ausführungsform gemäß Figur 1 ist das Zufalls-Kennmittel 15 ein Zufallsmuster, das in einem Eckbereich der Verpackung 10 angeordnet ist. Das Zufallsmuster ist aus einer Verteilung von Luminophoren 16 gebildet. Derartige Luminophore 16 sind durch Bestrahlung mit Licht aus dem ultravioletten Spektralbereich (UV-Licht) sichtbar zu machen. Das Zufallsmuster kann aber auch aus einer Verteilung anderer Partikel gebildet sein. Das Zufallsmuster ist von außen sichtbar bzw. erfaßbar an der Verpackung 10, nämlich auf der oder an der Faltschachtel 11 angeordnet. Die Luminophore 16 können als Partikel, Pigmente oder Fäden auch in die Fasern der aus Karton oder dergleichen hergestellten Faltschachtel 11 gemischt sein. Die Lage jedes Zufallsmusters ist bevorzugt für Meßmittel, Erfassungsmittel und dergleichen leicht zugänglich angeordnet, und zwar auf der Vorderseite der Verpackung 10. Jede andere Position auf der Rückseite, den Seiten- oder Stirnflächen ist ebenfalls möglich.

Das Zufalls-Kennmittel 15 kann auch im Bereich des Aufreißstreifens 13 angeordnet sein. Der Aufreißstreifen 13 gemäß Figur 2 ist als Informationsträger zur Aufnahme des Zufalls-Kennmittels 15, das wiederum ein aus einer Luminophore-Verteilung gebildetes Zufallsmuster ist, zusätzlich mit einem Codierungsmittel 17, insbesondere einer Seriennummer 18 versehen. Weiterhin trägt der Aufreißstreifen 13 einen Strichcode 19 sowie Referenzmarken 20. Die Referenzmarken 20 dienen zur leichteren Erfassung der Lage der Limninophore 16. Die Lage der Luminophore 16 kann z.B. durch Abstände X und Y in Bezug auf die Referenzmarken 20 sowie die Länge Z eines Luminophors 16 sowie des Winkels ϕ erfaßt werden. Andere Meßgrößen, Abstände, Winkel oder dergleichen können jedoch ebenfalls zur Erfassung des aus den Luminophoren 16 gebildeten Zufallsmusters herangezogen werden.

In einer weiteren Ausführungsform ist das Zufalls-Kennmittel 15 an der bzw. auf der Umhüllung 12 angeordnet. Die Umhüllung 12 ist üblicherweise aus einer Folie 21 gebildet, die üblicherweise als Rollenware bevorratet und mit statistisch verteilten Luminophoren 16 durchsetzt ist. Die Dichte der Luminophore 16 kann variieren, bevorzugt ist jedoch eine Dichte von ca. 20 Luminophorepartikeln pro 100 cm². Die Folie 21 kann auch mit Luminophoren 16 besprenkelt sein, bevorzugt mit einer Dichte von ca 20-50 Luminophoresprenkeln pro 100 cm².

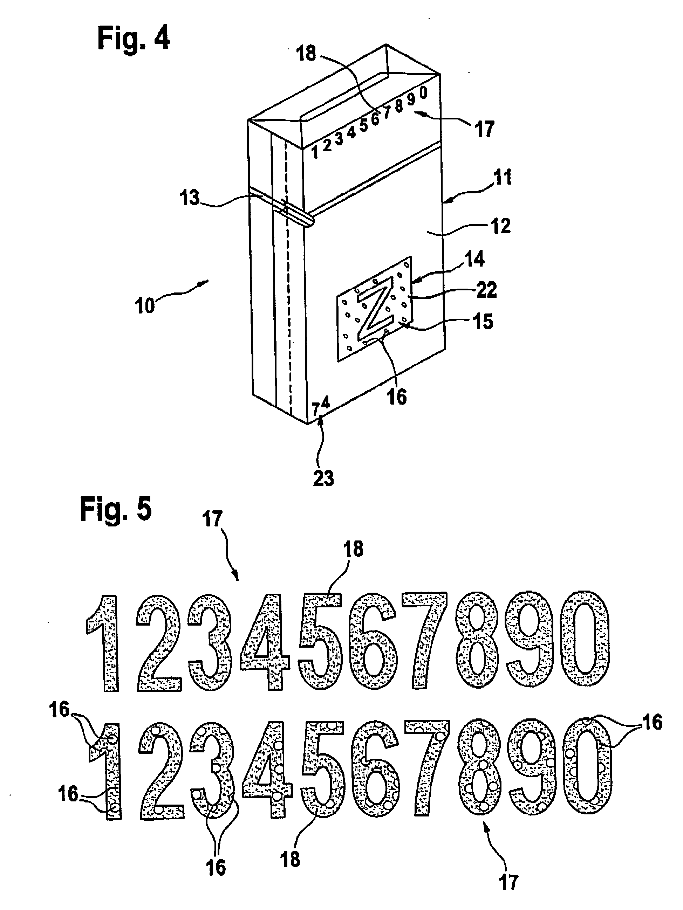

In der Ausführungsform gemäß Figur 4 ist das Zufalls-Kennmittel 15 auf einem Etikett 22 aufgebracht. Bevorzugt ist das Etikett 22 farbig ausgebildet und trägt eine zufällige Verteilung von Luminophoren 16. Das Etikett 22 kann zwischen Faltschachtel 11 und Umhüllung 12 oder von außen auf der Umhüllung 12 aufgebracht sein. Zusätzlich ist die gezeigte Verpackung 10 mit einer Seriennummer 18 versehen. Die Seriennummer 18 kann zum einen als einfacher Druck mit Tinte oder dergleichen ausgebildet sein (Figur 5, obere Seriennummer). Alternativ kann die Seriennummer 18 selbst auch Träger eines alternativen oder ergänzenden Zufalls-Kennmittels 15 dienen (Figur 5, untere Seriennummer). Es besteht demnach die Möglichkeit, eine Verpackung 10 mit mehr als einem Zufalls-Kennmittel 15 bzw. mehreren Zufallsmustern zu versehen.

Die Seriennummer 18 kann eine Verteilung von Luminophoren 16 in der Tinte oder dergleichen aufweisen. Hierzu sind die Luminophore 16 als nicht mischbarer Zusatz in der Tinte oder dergleichen enthalten. Die Verteilung der Luminophore 16 beschränkt sich dabei ausschließlich auf den mit der Tinte oder dergleichen bedruckten Bereich. In einer nicht gezeigten Variante können die Luminophore 16 jedoch im Bereich der seriennummer 18 angeordnet sein, derart, daß die Luminophore 16 neben, oberhalb, unterhalb, zwischen oder auf den einzelnen Zeichen der Seriennummer 18 angeordnet sind.

Die Verpackung 10 in der Figur 4 ist weiterhin mit einer Kennung 23 versehen. Die Kennung 23 ist aus der Verteilung der Luminophore 16 generierbar, und zwar bevorzugt über mathematische Algorithmen, durch übliche kryptologische Verfahren oder dergleichen. Die Kennung 23 ist das Ergebnis der Berechnung der Verteilung der Luminophore 16 und wahlweise in verschlüsselter oder unverschlüsselter. Darstellung auf der Verpackung 10 angeordnet, In der gezeigten Ausführung ist die Kennung 23 eine unverschlüsselte Ziffernfolge. Die Kennung 23 kann jedoch auch aus Buchstaben, Bildbestandteilen, anderen Zeichen oder einer Kombination davon gebildet sein.

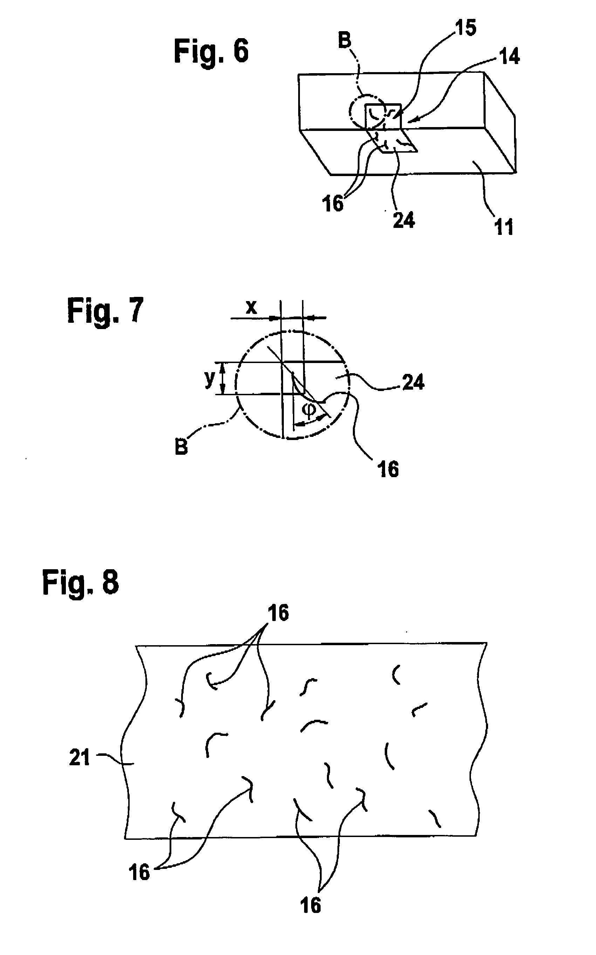

Eine weitere Ausführungsform der Verpackung 10 weist eine Banderole 24, insbesondere eine Steuerbanderole, auf. Die Banderole 24 ist Trägerin des Zufalls-Kennmittels 15, indem die Verteilung der Luminophore 16 auf der Banderole 24 zufällig aufgebracht ist. Die Position der Luminopbore 16 ist anhand definierter Parameter, wie z.B. X und Y sowie Winkel ϕ, relativ zu einem entsprechenden Koordinatensystem bestimmbar (siehe Figur 7).

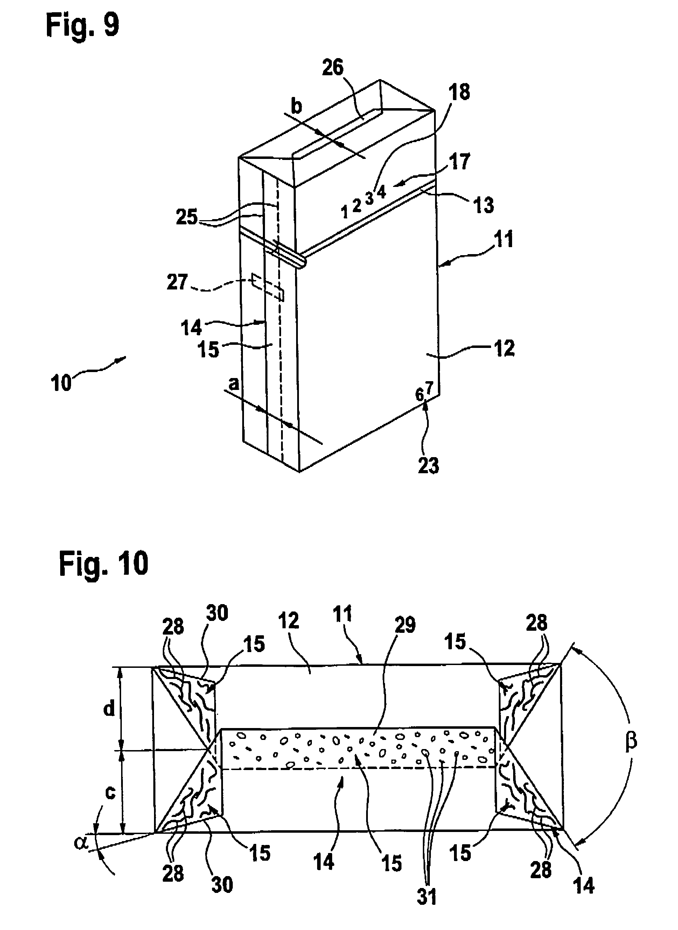

Das Zufalls-Kennmittel 15, nämlich das Zufallsmuster kann auch eine durch die Herstellung der Verpackung 10 bedingte, für die Verpackung 10 jeweils charakteristische Meßgröße sein. In der Figur 9 beispielsweise ist das Zufallsmuster eine Seitennaht 25 der Umhüllung 12. Die Umhüllung 12 überlappt sich unter Bildung der Seitennaht 25. Dieses Zufallsmuster entsteht erst direkt bei der Herstellung und definiert die Verpackung, 10 eindeutig. Anhand von Parametern, wie zB. die Breite a der Seitennaht 25 oder die Breite b einer Stirnnaht 26, aber such andere Abstände, Winkel oder dergleichen, können zur Erfassung des Zufallsmusters herangezogen werden. Zur vereinfachten Erfassung des Zufallsmusters ist eine Rastermarke 27 vorgesehen, die vorzugsweise unter der Umhüllung 12 im Bereich der Seitennaht 25 angeordnet ist.

Das kann jedoch auch eine Spaltbreite im Bereich des Klappdeckels der Verpackung 10 oder die Erfassung von Schnittkanten z.B. mit Hilfe von Parametern c und d sowie Winkeln α und β sein (siehe z.B. Figur 10). In der Figur 10 sind des weiteren Zufallsmuster in Form von Wellenmustern 28 oder Kontaktflächen 29 an Verbindungsstellen der Umhüllung 12 gezeigt. Die Wellenmuster 28 z.B. ergeben sich im Bereich von Falzen 30 und sind für jede Verpackung 10 einmalig, so daß die Anordnung und Ausbildung der Wellenmuster 28 erfaßbar und optional auch in eine Kennung 23 umwandelbar ist. Gleiches gilt für die Kontaktfläche 29, die in ihrem Bereich Luftblasen 31 oder dergleichen aufweist. Die Lage, Anzahl und Verteilung der Luftblasen 31 ist packungsspezifisch und von außen als Zufallsmuster erfaßbar.

Von den zuvor beschriebenen Sicherungsmitteln zum Kennzeichnen und Identifizieren der Verpackung 10, nämlich dem Zufalls-Kennmittel 15, dem Codierungsmittel 17 und der Kennung 23, stehen mindestens zwei in Korrelation zueinander. Vorzugsweise steht das Codierungsmittel 17 in vorgegebener und reproduzierbarer Beziehung zum Kennzeichnungsmittel 14 bzw. zum Zufalls-Kennmittel 15. Aber auch andere Wechselbeziehungen können herstellbar sein. Die Korrelation kann z.B. durch Speicherung und/oder durch eine Verschlüsselungsfunktion gebildet sein. Die Speicherung kann als Aufdruck auf der Verpackung 10 oder in einer externen Datenbank ausgebildet sein.

Die zuvor beschriebene Verpackung 10 ist im wesentlichen zweiteilig, nämlich aus Faltschachtel 11 und Umhüllung 12 bestehend, ausgebildet. Es können aber auch einteilige oder mehrteilige Verpackungen, aber auch völlig andere Gegenstände, wie z.B.Dokumente,Etiketten, Ersatzteile mit dem individuellen Kennzeichnungsmittel 14, insbesondere dem Zufalls-Kennmittel 15, sowie dem Codierungsmittel 17 und der Kennung 23 versehen sein. Im folgenden werden noch andere Verpackungstypen beschrieben, für die hinsichtlich der Kennzeichnung und Identifizierung grundsätzlich das bereits zu den oben genannten Verpackungen 10 beschriebene Prinzip gilt.

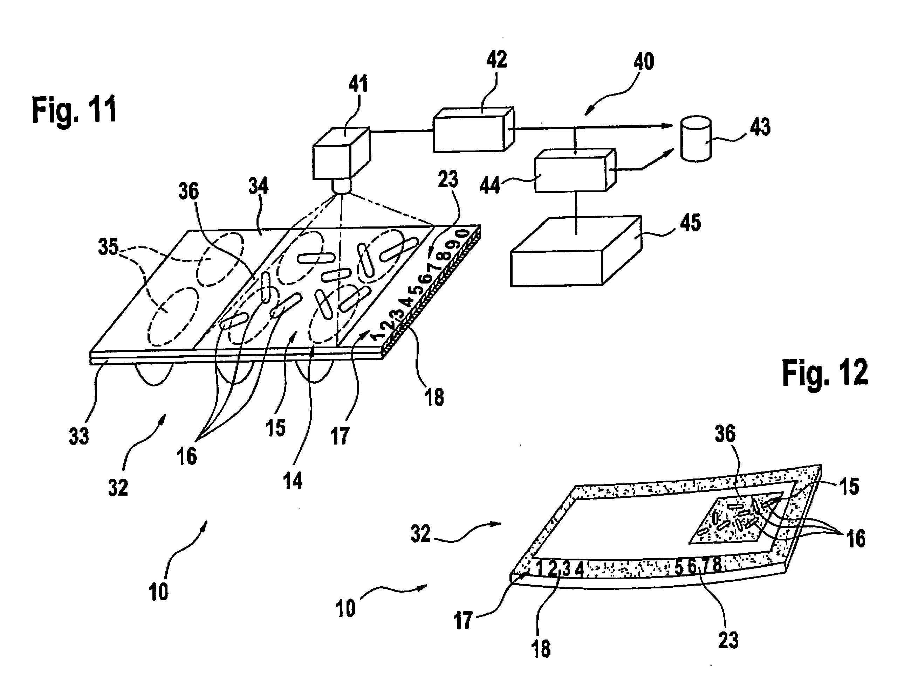

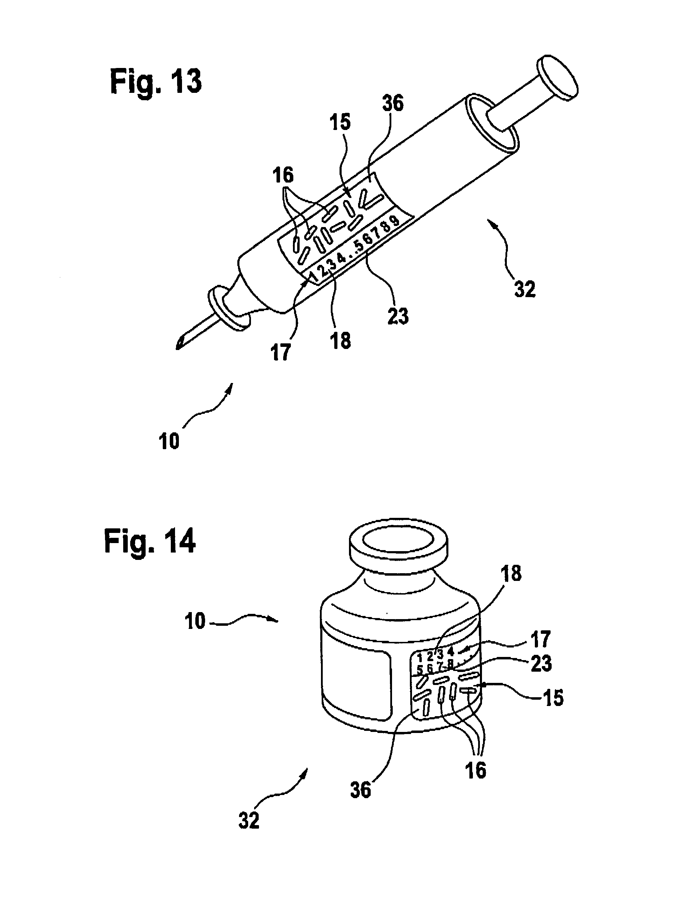

In den Figur 11 bis 14 sind beispielsweise Verpackungen 10 gezeigt, die als Primarverpackungen 32 ausgebildet sind. Die Primärverpckung 32, die in direktem Kontakt zu dem vapackten Produkt steht, kann z.B. eine Blisterverpackung für feste Substanzen, insbesondere Medikamente (Fig.11), ein Siegelbandbeutel für pulverförmige oder flüssige Substanzen (Fig.12) oder eine Spritze bzw. ein Fläschchen, ein Flakon, eine Phiole, eine Carpule oder dergleichen für flüssige Substanzen (Fig. 13 und 14) sein. Sämtliche in den Figuren 11 bis 14 gezeigte Ausführungsformen sind mit dem Zufalls-Kennmittel 15, dem Codierungsmittel 17 sowie der Kennung 23 versehen. Es ist jedoch alternativ auch möglich, die einzelnen Primarverpackungen 32 nur mit einem der Sicherungsmittel zu versehen.

Die Blisterverpackung in Figur 11 umfaßt einen vorzugsweise aus Thermofolie gebildeten Träger 33 für die Produkte sowie eine Deckelfolie 34 zum Verschließen des mit Nestern 35 zur Aufnahme der Produkte versehenen Trägers 33. Vorzugsweise direkt auf die Deckelfolie 34 ist ein Zufallsmuster aus Luminophoren 16 als Zufalls-Kennmittel 15 aufgebracht. Die Verteilung der Luminophore 16 ist auf ein Musterfeld der Primärverpackung 32 beschränkt. Alternativ ist es aber auch denkbar, die Verteilung über die gesamte Primärverpackung 32 auszudehnen. Die Luminophore 16 können auch auf ein Etikett 36 aufgebracht sein, wobei das Etikett 36 optional selbstzerstörend ausgebildet sein kann. Vorzugsweise im Randbereich der Blisterverpackung sind die Seriennummer 18 als Codierungsmittel 17 sowie die aus dem Zufallsmuster generierte Kennung 23 angeordnet Die weiteren in den Figuren 12 bis 14 gezeigten Primärverpackungen 32 sind entsprechend ausgebildet bzw. gekennzeichnet. Die Primärverpackungen 32 können neben Medikamenten auch für andere Produkte, wie z.B. Kosmetika, elektronische Bauelemente u.a. ausgebildet sein.

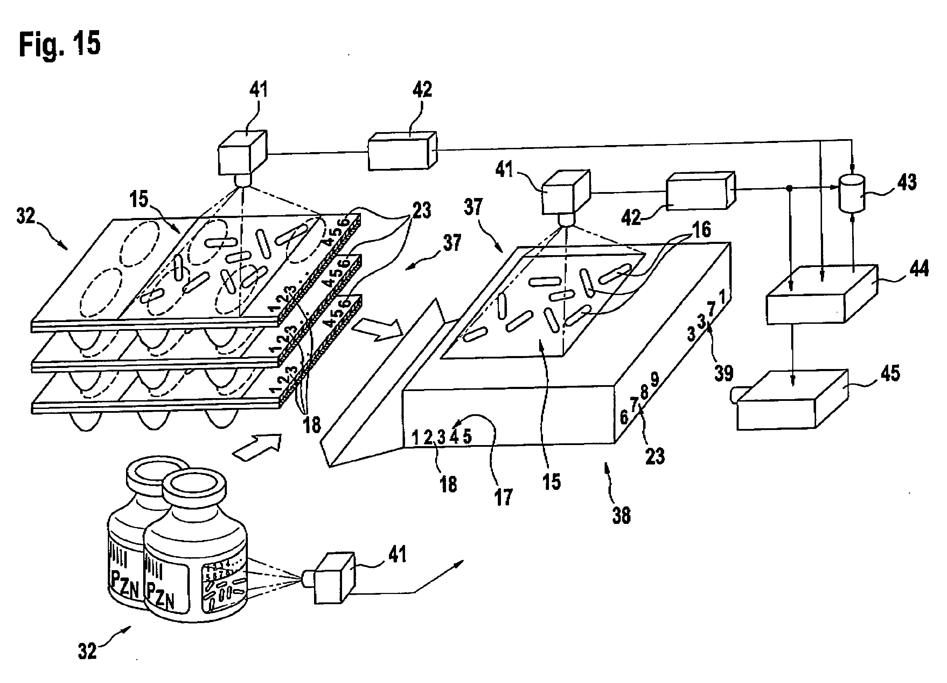

In Figur 15 ist eine Packungseinheit 37 gezeigt, die aus mehreren Primärverpackungen 32 und einer Sekundärverpackung 38 gebildet ist. Die Primärverpackungen 32 sind wie zuvor beschrieben ausgebildet, wobei jede Primärverpackung 32 ein eigenes Codierungsmittel 17 bzw. eine z.B. sämtliche Produktionsdaten tragende Seriennummer 18 sowie eine vom Zufalls-Kenmnittell 15 bzw. der Verteilung der Luminophore 16 als Zufallsanuster abheagige Kennung 23 aufweist Eine oder mehrere der Primärverpackungen 32, unabhängig davon, ob es sich um Blistaverpackungen, Flakone oder dergleichen handelt, werden in ihrer gekennzeichneten Form in der Sekundärverpackung 38 angeordnet Die Sekundirverpackung 38 ist in der gezeigten Ausführungsform eine Faltschachtel aus Karton oder dergleichen. Jede andere Umverpackung aus den üblichen Verpackungsmaterialien ist jedoch ebenfalls möglich.

Die Kennzeichnungen der Primärverpackungen 32, also das Zufalls-Kennmittel 15 und/oder das Codierungsmittel 17 und/oder die Kennung 23, stehen in Korrelation zu den Kennzeichnungen der Sekundärverpackung 38. Vorzugsweise weist die Sekundärverpackung 38 eine Seriennummer 18 sowie eine Kennung 23 mit wobei die Kennung 23 als sogenante Koppelnummer 39 ausgebildet ist. Die Koppelnummer 39 ist aus den Seriennummern 18 und/oder Kennungen 23 der Primärverpackungen 32 generiert und erzeugt damit eine eindeutige Beziehung zwischen Primärverpackungen 32 und Sekundärverpackung 38.

Eine oder mehrere Sekundärverpackungen 38 können weiterhin in oder auf einer (nicht dargestellten) Tertiärverpackung angeordnet sein. Die Tertiärverpackung kann eine Umhüllung, ein Umkarton, ein Versandkarton, eine Transport- oder Präsentationspalette oder dergleichen sein. Die Tertiarverpackung kann wiederum alternativ oder kumulativ mit einer Kennzeichnung aus Zufalls-Kennmittel 15 und/oder Codierungsmittel 17 und/oder Kennung 23 versehen sein, wobei die Kennzeichnung der Tertiärverpackung mit der Kennzeichnung der Primärverpackung 32 und/oder der Sekundärverpackung 38 korreliert.

Aus den Figuren 11 und 15 gehen weiterhin Einrichtungen 40 zur Kennzeichnung und Identifizierung der Verpackungen 10 bzw. der Primär- und Sekundärverpackungen 32 und 38 hervor. Die Einrichtungen 40 zur Kennzeichnung und Identifizierung sind im wesentlichen ähnlich aufgebaut. Im Idealfall ist eine Einrichtung 40 zur Kennzeichnung der Verpackung 10 (beinhaltet auch die Primärverpackung 32 und Sekundärverpackung 38) im eigentlichen Sinne gar nicht erforderlich, da die Verpackungen 10 selbst bzw. Teile derselben das Kennzeichnungsmittel 14 darstellen. Um jedoch eine spätere Identifizierung der Verpackung 10 gewährleisten zu können, muß mindestens eine spezifische Information der Verpackung 10 aufgenommen werden. In einer sehr einfachen und nicht dargestellten Ausführung kann die Einrichtung 40 zur Kennzeichnung der Verpackung 10 lediglich aus einem Mittel zum Erfassen mindestens eines Zusfallsmusters der Verpackung 10, einem Mittel zur Generierung und Anzeige bzw. Ausgabe der Kennung 23 aus dem Zufallsmutster sowie einem Mittel zum Hinterlegen der Kennung 23 ausgebildet sein. Damit kann in einem ersten Schritt eine einfache Kennzeichnung der Verpackung, 10 erfolgen, die eine spätere eindeutige Identifizierung erlaubt. Der entsprechenden Einrichtung 40 zum Identifizieren fehlt es lediglich am Mittel zum Hinterlegen der Kennung 23. Ansonsten sind die erforderlichen Mittel gleich.

Die bevorzugte Einrichtung 40 zur Kennzeichnung von Gegenständen aller Art, insbesondere Verpackungen 10 umfaßt im wesentlichen ein (nicht dargestelltes) Mittel zum Aufbringen des Zuffalls-Kennmittel 15 durch eine zufällige Verteilung der Luminophore 16. Für den Fall, daß das Zufalls-Kennmittel 15 bereits off-line im Herstellungsprozeß der für die Verpackung 10 erforderlichen Materialien, zB. bei der Herstellung des Kartons für Faltschachteln 11 oder der Folie 21, erfolgt ist, ist das genannte und nicht dargestellte Mittel entbehrlich. Des weiteren ist als Mittel 41 eine Kamera oder dergleichen zur Erfassung des Zufalls-Kennmittels 15 vorgesehen. Die Kamera ist an das Mittel 42 zum Generieren, nämlich Auswerten der erfaßten Daten zur Bildung der Kennung 23 sowie zum Komprimieren der Kennung 23 angeschlossen. Weiterhin umfaßt die Einrichtung 40 eine Datenbank 43 als Speichermedium zum Ablegen der ausgewerteten und komprimierten Kennung 23 des Zufalls-Kennmittels 15. Die Datenbank 43 dient auch zur Speicherung des zuvor auf die Verpackung 10 aufgebrachten Codierungsmittels 17 bzw. der Seriennummer 18. In der Datenbank 43 ist die Kennung 23 des Zufalls-Kennmittels 15 der entsprechenden Seriennummer 18 zur Bildung eines einzigartigen Datenpaares zugeordnet. Die Kennungen 23 auf der Verpackung 10 und in der Datenbank 43, die jeweils aus demselben Zufalls-Muster, jedoch mit unterschiedlicher Genauigkeit generierbar sind, können eine unterschiedliche Datensatzlänge aufweisen.

Das Mittel 42 ist zur Generierung der Kennung 23 aus dem Zufalls-Kennmittel 15 ausgebildet und verfügt hierzu über geeignete Algorithmen. An das Mittel 42 ist ein weiteres Mittel 44 angeschlossen, das zur Kryptologie der Kennung 23, also Verschlüsselung und ausgebildet ist. Das Mittel 44 ist mit einem Drucker 45 oder dergleichen verbunden, so daß die verschlüsselte oder unverschlüsselte Kennung 23 auf die Verpackung 10 aufbringbar ist. Mit dem Drucker 45 kann zum Beispiel auch die Sehennummer 18 auf die Verpackung 10 gebracht werden. Die Seriennummer 18 läßt sich aber alternativ auch durch ein separates Mittel aufbringen. Sämtliche Mittel 41 bis 45 der Einrichtung 40 sind miteinander vernetzt, so daß eine maschinelle automatisierte Kennzeichnung der Verpackungen 10 gewährleistet ist.

Die Einrichtung 40 zum Identifizieren der Verpackung 10 entspricht im wesentlichen der Einrichtung 40 zur Kennzeichnung der Verpackung 10. Es ist mindestens das Mittel 41 zum Erfassen mindestens eines der Verpackung 10 eigenen Zufalls-Kennmittels 15 sowie ein Mittel 42 zum Generien und Anzeigen bzw. Ausgeben der Kennung 23 aus dem Zufalls-Kenmmittel 15 vorgesehen. Das Mittel 41 ist zum Aussenden von UV-Licht und Aufnehmen der sichtbar gemachten Informationen ausgebildet. Alternativ ist jedoch auch eine Ausbildung zum Aussenden von IR-Licht oder Licht anderer Wellenlängen auch im sichtbaren oder unsichtbaren Bereich möglich. Das Mittel 42 ist weiterhin zusätzlich zur Erfassung weiterer auf der Verpackung 10 befindlicher Informationen, insbesondere der Kennung 23 und der Seriennummer 18. ausgebildet. Die einzelnen Informationen können jedoch auch durch eigene Mittel, vorzugsweise Kameras, erfaßt werden. Das Mittel 42 ist zur Ausführung mathematischer Funktionen derart ausgebildet, daß das Zufalls-Kennmittel 15 in die Kennung 23 umsetzbar ist. Zusätzlich ist das Mittel 44 zum Entschlüsseln der Kennung 23 vorgesehen. Zum Abgleich der aufgenommen und generierten Mittels der Mittel 41, 42, 44 sind diese an die Datenbank 43 angeschlossen, zum einen Vergleich mit den dort abgelegten Informationen vornehmen zu könnten Sämtliche Mittel 41 bis 44 stehen hierzu in Wirkverbindung zueinander, indem sie miteinander vernetzt sind. Ohne die Vernetzung ist die Einrichtung 40 als mobiles Handgerät ausgebildet, wobei die Mittel 41, 42, 44 in einer gemeinsamen Einheit untergebracht sind.

Im folgenden werden die Verfahren zur Kennzeichnung und Identifizierung näher beschrieben: Die Verpackungen 10, 32, 38 werden mit einem individuellen Zufallsmuster versehen. Das Zufallsmuster, vorzugsweise eine Verteilung von Luminophoren 16, wird über die gesamte Verpackung 10, 32, 38 oder in einem Musterfeld aufgebracht. Die Aufbringung kann off-line oder vorzugsweise on-line erfolgen. Die on-line-Aufbringung erfolgt z.B. durch Direktdruck auf die Faltschachtel 11, die Umhüllung 12, den Träger 33 oder die Deckelfolie 34. Auch Etiketten 22, 36 können bedruckt werden. Dabei werden die Luminophore 16 beispielsweise in die Druckfarbe gemischt. Die Luminophore 16 können jedoch auch bereits bei der Herstellung der Materialien für die Verpackung 10, 32, 38 in die Materialien eingebracht werden.

Des weiteren wird auf die Verpackung 10, 32, 38 eine einmalige Seriennummer 18 aufgedruckt. Die Seriennummer 18 wird für jede Verpackung 10 in der Datenbank 43 abgelegt. Das packungsspezifische Zufallsmuster wird durch die Mittel 41 erfaßt, durch die Mittel 42 ausgewertet, komprimiert und ebenfalls in der Datenbank 43 abgelegt In der Datenbank 43 wird jede Seriennummer 18 einer Verpackung 10, 32, 38 dem komprimierten Zufallsmuster zugeordnet Alternativ oder kumulativ kann eine aus dem Zufallsmuster generierte Kennung 23 jeder Verpackung 10, 32, 38 ebenfalls in der Datenbank 43 abgelegt oder mittels des Druckers 45 auf die Verpackung 10, 32, 38 gedruckt werden. Die Kennung 23 kann vor dem Aufdrucken oder vor dem Hinterlegen noch durch das Mittel 44 verschlüsselt werden.

Die Identifizierung erfolgt quasi in gleicher Weise. Zum Identifikation der Verpackungen 10, 32, 38 wird das Zufallsmuster erfaßt. Dies erfolgt z.B. durch ein Handgerät, das einerseits zum Aussenden von UV-Licht oder Licht anderer Wellenlänge ausgebildet ist, um die Luminophore 16 sichtbar zur machen und zum anderen zum Aufnehmen der Verteilung der Lumkophore 16 dient Mittels geeigneter Algorithmen wird die Kennung 23 ermittelt. Die erhaltenen Daten, nämlich die aus dem Zufallsmuster ermittelte Kennung 23 sowie die Serienummmer 18 werden dann mit den auf der Verpackung 10, 32, 38 oder in der Datenbank 43 hinterlegten Datensätzen verglichen. Bei ausreichender bzw. hoher Korrelation - idealerweise Übereinstimmung - der Datensatz kann sicher davon ausgegangen werden, daß es sich um eine Originalverpackung handelt. Die Korrelation ist dabei ein Maß für die Erkennungssicherheit. Bei der Komprimierung der Datensätze geben Informationen verloren. Dadurch kann nur eine Ähnlichkeit (=Korrelation) der Datensätze ermittelt werden. Man spricht dann von sogenannter "unscharfer Auswertung". Die erreichbare Genauigkeit ist von der Datensatzlänge abhängig, d.h. je länger die Kennung 23, desto höher die Sicherheitsstufe.

In weiteren nicht detailliert beschriebenen die jedoch ebenfalls bevorzugt eingesetzt werden können, ist es zum Beispiel möglich, aus dem auch zwei oder mehrere Kennungen 23 zu generieren, die unterschiedliche Datensatzlängen aufweisen. Eine kürzere Kennung 23 ist direkt auf der Verpackung 10 aufgebracht, während die längere Kennung 23, die nahezu beliebig lang sein kann, in der Datenbank 43 abgelegt wird. Als Zufallmuster können auch mikroskopisch kleine Muster aus Verteilungen von Partikeln, oder dergleichen oder auch aus Fasern der Verpackung 10 selbst erfaßt und ausgewertet werden.

Bei der Kennzeichnung und der Packungseinheit 37 bestehen verschiedene Möglichkeiten. In einem ersten Beispielsfall nimmt das Mittel 41 die Daten, Muster oder dergleichen von den drei einzelnen Primärverpackungen 32 auf, generiert daraus eine gemeinsame Koppelnummer 39, verschlüsselt die Koppelnummer 39 mit dem Mittel 44 und bringt die Koppemummer 39 auf die Sekundarverpackung 38 auf Des weiteren wird die Seriennummer 18 auf die Sekundarverpackung 38 aufgebracht. Mit dem Mittel 41 werden weiterhin die Daten, Muster oder dergleichen von der Sekundirverpackung 38 angenommen, mit dem Mittel 42 die Kennung 23 generiert und nach Verschlüsselung mit dem Mittel 44 auf die Sekundärverpackung 38 aufgebracht

Alternativ oder kumulativ können sämtliche erfaßten, generierten und verschlüsselten Daten, Muster, Informationen etc. auch in der Datenbank 43 abgelegt und packungszugehörig einander zugeordnet werden.

Zum Identifizieren werden die Daten, Muster, Informationen etc. der Sekundarverpackung 38 aufgenommen, die Kennung 23 wird generiert und entschlüsselt und mit der zuvor auf der Sekundärverpackung 38 oder in der Datenbank 43 abgelegte Kennung 23 vergleichen. Die Zuordnung zu der Seriennummer 18 erhöht die Sicherheit. Um die Zuordnung der in der Sekundärverpackung 38 befindlichen Primärverpackungen 32 zu prüfen, werden die Daten, Muster, Informationen etc. der Sekundärverpackungen 32 erfaßt, generiert und entschlüsselt und mit der Koppelnummer 39 abgeglichen.

## Patentansprüche

1. Gegenstand, der mit einem individuellen Kennzeichnungsmittel (14) zur Identifizierung versehen ist, wobei das Kennzeichnungsmittel (14) ein dem Gegenstand eigenes Zufalls-Kennmittel (15) ist, **dadurch gekennzeichnet, daß** das Zufalls-Kennmittel (15) aus wenigstens einem aus einer Verteilung von Luminophoren (16) gebildeten Zufallsmuster gebildet ist.

2. Gegenstand nach Anspruch 1, **dadurch gekennzeichnet, daß** der Gegenstand eine Verpackung (10) ist.

3. Gegenstand nach Anspruch 1 oder 2, **dadurch gekennzeichnet, daß** das Zufalls-Kennmittel (15) Bestandteil der Ausbildung der Verpackung (10) ist.

4. Gegenstand nach einem der Ansprüche 1 bis 3, **dadurch gekennzeichnet, daß** zusätzlich zum Zufallsmuster eine aus dem Zufallsmuster generierte Kennung (23) auf der bzw. an der Verpackung (10) angeordnet ist.

5. Gegenstand nach einem der Ansprüche 1 bis 4, **dadurch gekennzeichnet, daß** die Verteilung erfaßbar und als wahlweise unverschlüsselte oder verschlüsselte Kennung (23) in einer Datenbank (43) und/oder als Aufdruck auf der Verpackung (10) hinterlegbar ist.

6. Gegenstand nach Anspruch 5, **dadurch gekennzeichnet, daß** zusätzlich zum Zufallsmuster und/oder der Kennung (23) ein Codierungsmittel (17), insbesondere eine Seriennummer (18), aufgebracht ist.

7. Gegenstand nach Anspruch 6, **dadurch gekennzeichnet, daß** das Codierungsmittel (17) in vorgegebener und reproduzierbarer Beziehung zum Kennzeichnungsmittel (14) steht.

8. Gegenstand nach Anspruch 6 oder 7, **dadurch gekennzeichnet, daß** das Codierungsmittel (17) und das Kennzeichnungsmittel (14) in Korrelation zueinander stehen.

9. Gegenstand nach Anspruch 8, **dadurch gekennzeichnet, daß** die Korrelation durch Speicherung gebildet ist.

10. Gegenstand nach Anspruch 8 oder 9, **dadurch gekennzeichnet, daß** die Korrelation durch eine Verschlüsselungsfunktion gebildet ist.

11. Gegenstand nach einem der Ansprüche 1 bis 10, **dadurch gekennzeichnet, daß** das Zufalls-Kennmittel (15) integraler Bestandteil der Verpackung (10) selbst ist.

12. Gegenstand nach einem der Ansprüche 1 bis 11, **dadurch gekennzeichnet, daß** das Zufalls-Kennmittel (15) wahlweise auf der gesamten Verpackung (10) oder in einem definierten Bereich der Verpackung (10) angeordnet ist.

13. Gegenstand nach einem der Ansprüche 1 bis 12, **dadurch gekennzeichnet, daß** die Verpackung (10) aus einer Primärverpackung (32) und/oder einer Sekundärverpackung (38) und/oder einer Tertiärverpackung gebildet ist.

14. Gegenstand nach Anspruch 13, **dadurch gekennzeichnet, daß** das Codierungsmittel (17) und/oder das Kennzeichnungsmittel (14) und/oder die Kennung (23) auf der Primärverpackung (32) und/oder der Sekundärverpackung (28) und/oder der Tertiärverpackung derart angeordnet sind, daß sie von außen eindeutig identifizierbar sind.

15. Gegenstand nach Anspruch 14, **dadurch gekennzeichnet, daß** die Kennung (23) mindestens auf der Sekundärverpackung (38) als Koppelnummer (39) ausgebildet ist, wobei die Koppelnummer (39) aus dem Codierungsmittel (17), und/oder dem Kennzeichnungsmittel (14) und/oder der Kennung (23) der Primärverpackung (32) generierbar ist.

16. Gegenstand nach einem der Ansprüche 2 bis 15, **dadurch gekennzeichnet, daß** das Zufallsmuster eine Spaltbreite und/oder ein Überlappungsbereich und/oder ein Kontaktbereich (29) von Verbindungsflächen und/oder eine Verbindungsnaht (25) und/oder ein Wellenmuster (28) einer Verbindungsnaht und/oder Falze (30) und/oder Schnittkanten oder dergleichen der Verpackung ist.

17. Verfahren zur individuellen Kennzeichnung von Gegenständen, insbesondere von Verpackungen (10) mit einem individuellen Kennzeichnungsmittel (14), **gekennzeichnet durch** die Schritte:
- Kennzeichnen des Gegenstandes mit einem dem Gegenstand eigenen Zufalls-Kenmnittel (15), nämlich einem aus einer Verteilung von Luminophoren (16) gebildeten Zufallsmuster, als Kennzeichnungsmittel (14),
- Erfassen des dem Gegenstand, insbesondere der Verpackung (10) eigenen Zufallsmusters,
- Umsetzen des Zufallsmusters in eine individuelle Kennung (23), und
- Hinterlegen der Kennung (23) als Datensatz in einer Datenbank (43) und/oder als Aufdruck auf dem Gegenstand, insbesondere der Verpackung (10).

18. Verfahren nach Anspruch 17, **dadurch gekennzeichnet, daß** eine Verpackung **gekennzeichnet** wird.

19. Verfahren nach Anspruch 17 oder 18, **dadurch gekennzeichnet, daß** das Umsetzen mittels einer geeigneten mathematischen Funktion erfolgt.

20. Verfahren nach einem der Ansprüche 17 bis 19, **dadurch gekennzeichnet, daß** die Kennung (23) vor dem Aufdrucken auf die Verpackung (10) bzw. vor der Hinterlegung in die Datenbank (43) verschlüsselt wird.

21. Verfahren nach einem der Ansprüche 17 bis 20, **dadurch gekennzeichnet, daß** die Kennung (23) vor dem Hinterlegen in die Datenbank (43) komprimiert wird.

22. Verfahren nach Anspruch einem der Ansprüche 17 bis 21, **dadurch gekennzeichnet, daß** das Zufalls-Kennmittel (15) optisch erfaßt wird.

23. Verfahren nach einem der Ansprüche 17 bis 22, **dadurch gekennzeichnet, daß** als Zufallsmuster die zufällige Verteilung von Luminophoren (16) mit UV-Licht sichtbar gemacht, numerisch codiert und gespeichert wird.

24. Verfahren nach einem der Ansprüche 17 bis 23, **dadurch gekennzeichnet, daß** die Verpackung (10) zusätzlich mit einem individuellen Codierungsmittel (17), insbesondere einer Seriennummer (18), versehen wird.

25. Verfahren nach Anspruch 24, **dadurch gekennzeichnet, daß** mindestens das Kennzeichnungsmittel (14) und das Codierungsmittel (17) zu einem Datenpaar verbunden und in eine vorgegebene, reproduzierbare Vergleichsbeziehung zueinander gesetzt werden.

26. Verfahren nach Anspruch 25, **dadurch gekennzeichnet, daß** die Datenpaare jeweils miteinander korrelieren und in einer Datenbank (43) hinterlegt werden.

27. Verfahren nach einem der Ansprüche 24 bis 26, **dadurch gekennzeichnet, daß** das Versehen der Verpackung (10) mit dem Codierungsmittel (17) und/oder dem Kennzeichnungsmittel (14) und/oder der Kennung (23) wahlweise on-line oder off-line erfolgt.

28. Verfahren nach einem der Ansprüche 24 bis 27, **dadurch gekennzeichnet, daß** das Kennzeichnungsmittel (14), das Codierungsmittel (17) und die Kennung (23) wahlweise auf eine Primärverpackung (32) und/oder eine Sekundärverpackung (38) und/oder eine Tertiärverpackung aufgebracht oder an einer dieser angebracht werden.

29. Verfahren zur Identifizierung von mit einem individuellen Kennzeichnungsmittel (14) versehenen Gegenständen, insbesondere Verpackungen (10) durch Erfassen und Auswerten des Kennzeichnungsmittels (14), **gekennzeichnet durch** die Schritte:
- Erfassen eines dem Gegenstand, insbesondere der Verpackung (10) eigenen Zufalls-Kennmittels (15) als Kennzeichnungsmittel (14), wobei das Zufalls-Kennmittel (15) **durch** Bestrahlen mit Licht im ultravioletten Spektralbereich sichtbar gemacht und optisch detektiert wird,
- Umsetzen des Zufalls-Kennmittels (15) in eine individuelle Kennung (23), und
- Abgleichen der Kennung (23) mit einem Aufdruck der Kennung (23) auf dem Gegenstand, insbesondere der Verpackung (10) und/oder einem in einer Datenbank (43) hinterlegten, die Kennung (23) beinhaltenden Datensatz.

30. Verfahren nach Anspruch 29, **dadurch gekennzeichnet, daß** das Umsetzen mittels einer geeigneten mathematischen Funktion erfolgt.

31. Verfahren nach Anspruch 29 oder 30, **dadurch gekennzeichnet, daß** das Zufalls-Kennmittel (15) gescannt wird, wobei aus den gescannten Informationen die zugehörige Kennung (23) ermittelt und mit einem auf der Verpackung (10) aufgebrachten Aufdruck und/oder einem in einer Datenbank (43) hinterlegten Datensatz verglichen wird.

32. Verfahren nach einem der Ansprüche 29 bis 31, **dadurch gekennzeichnet, daß** zusätzlich ein auf der oder an der Verpackung (10) angeordnetes Codierungsmittel (17), insbesondere eine Seriennummer (18), erfaßt wird.

33. Verfahren nach Anspruch 32, **dadurch gekennzeichnet, daß** ein aus Codierungsmittel (17) und Kennzeichnungsmittel (14) gebildetes Datenpaar, das aus den erfaßten Informationen gebildet wird, mit einem in der Datenbank (43) hinterlegten Datenpaar verglichen wird.

34. Einrichtung zur individuellen Kennzeichnung von Gegenständen, insbesondere von Verpackungen (10) mit einem individuellen Kennzeichnungsmittel (14), **dadurch gekennzeichnet, daß** ein Mittel (41) zum Erfassen mindestens eines dem Gegenstand, insbesondere der Verpackung (10) eigenen Zufalls-Kennmittel (15) als Kennzeichnungsmittel (14), ein Mittel (42) zum Generieren und Anzeigen bzw. Ausgeben einer Kennung (23) aus dem Zufalls-Kennnüttel (15) sowie ein Mittel zum Hinterlegen der Kennung (23) vorgesehen ist.

35. Einrichtung nach Anspruch 34, **dadurch gekennzeichnet, daß** zusätzlich ein Mittel zum Aufbringen des Zufalls-Kennmittels (15) vorgesehen ist.

36. Einrichtung nach Anspruch 34 oder 35, **dadurch gekennzeichnet, daß** das Mittel zum Hinterlegen einen Drucker (45) oder dergleichen und/oder ein Speichermittel, insbesondere eine Datenbank (43), umfaßt.

37. Einrichtung nach einem der Ansprüche 34 bis 36, **dadurch gekennzeichnet, daß** zusätzlich ein Mittel zum Aufbringen eines Codierungsmittels (17) vorgesehen ist, wobei das Mittel zum Aufbringen des Codierungsmittels (17) mit dem Drucker (45) zum Hinterlegen der Kennung (23) identisch sein kann.

38. Einrichtung nach einem der Ansprüche 34 bis 37, **dadurch gekennzeichnet, daß** zusätzlich Mittel (44) zum Verschlüsseln der Kennung (23) vorgesehen sind.

39. Einrichtung nach einem der Ansprüche 34 bis 38, **dadurch gekennzeichnet, daß** sämtliche Mittel (41, 42, 43, 44, 45) der Einrichtung (40) miteinander in Wirkverbindung stehen, wozu die Mittel (41 bis 45) hierzu vorzugsweise untereinander vernetzt sind.

40. Einrichtung zur Identifizierung von mit einem individuellen Kennzeichnungsmittel (14) versehenen Gegenständen, insbesondere Verpackungen (10), **dadurch gekennzeichnet, daß** ein Mittel (41) zum Erfassen mindestens eines dem Gegenstand, insbesondere der Verpackung (10) eigenen Zufalls-Kennmittels (15) als Kennzeichnungsmittel (14) sowie ein Mittel (42) zum Generieren und Anzeigen bzw. Ausgeben einer Kennung (23) aus dem Zufalls-Kennmittel (15) vorgesehen ist.

41. Einrichtung nach Anspruch 40, **dadurch gekennzeichnet, daß** das Mittel (41) zum Aussenden von UV-Licht und Aufnehmen der sichtbar gemachten Informationen ausgebildet ist.

42. Einrichtung nach Anspruch 40 oder 41, **dadurch gekennzeichnet, daß** das Mittel (41) zusätzlich zur Erfassung weiterer auf der Verpackung (10) befindlicher Informationen, insbesondere der Kennung (23) und einem Codierungsmittel (17), ausgebildet ist.

43. Einrichtung nach einem der Ansprüche 40 bis 42, **dadurch gekennzeichnet, daß** das Mittel (42) zur Ausführung mathematische Funktionen ausgebildet ist, derart, daß das Zufalls-Kennmittel (15) in die Kennung (23) umsetzbar ist.

44. Einrichtung nach einem der Ansprüche 40 bis 43, **dadurch gekennzeichnet, daß** zusätzlich ein Mittel (44) zum Entschlüsseln der Kennung (23) vorgesehen ist.

45. Einrichtung nach einem der Ansprüche 40 bis 44, **dadurch gekennzeichnet, daß** die Mittel (41, 42, 44) an ein Speichermittel, insbesondere eine Datenbank (43), angeschlossen sind.

46. Einrichtung nach Anspruch 45, **dadurch** gekenntzeichnet, daß sämtliche Mittel (41 bis 44) in Wirkverbindung miteinander stehen, wobei die Mittel (41 bis 44) hierzu vorzugsweise vernetzt untereinander sind.

47. Einrichtung nach einem der Ansprüche 40 bis 46, **dadurch gekennzeichnet, daß** die Einrichtung (40) als mobiles Handgerät ausgebildet ist.

## Claims

1. Article which is provided with an individual marking means (14) for identification, wherein the marking means (14) is a random identifier (15) peculiar to the article, **characterised in that** the random identifier (15) is composed of at least one random pattern composed of a distribution of luminophores (16).

2. Article according to claim 1, **characterised in that** the article is a package (10).

3. Article according to claim 1 or 2, **characterised in that** the random identifier (15) forms part of the design of the package (10).

4. Article according to any one of claims 1 to 3, **characterised in that** in addition to the random pattern a marking (23) generated from the random pattern is arranged on the package (10).

5. Article according to any one of claims 1 to 4, **characterised in that** the distribution is detectable and can be filed or deposited as an optionally coded or uncoded marking (23) in a data bank (43) and/or as print on the package (10).

6. Article according to claim 5, **characterised in that**, in addition to the random pattern and/or marking (23), a coding means (17), in particular a serial number (18), is applied.

7. Article according to claim 6, **characterised in that** the coding means (17) is in a predetermined and reproducible relationship to the marking means (14).

8. Article according to claim 6 or 7, **characterised in that** the coding means (17) and the marking means (14) are in correlation with each other.

9. Article according to claim 8, **characterised in that** the correlation is formed by storage.

10. Article according to claim 8 or 9, **characterised in that** the correlation is formed by a coding function.

11. Article according to any one of claims 1 to 10, **characterised in that** the random identifier (15) is an integral part of the package (10) itself.

12. Article according to any one of claims 1 to 11, **characterised in that** the random identifier (15) is optionally arranged on the whole package (10) or in a predefmed region of the package (10).

13. Article according to any one of claims 1 to 12, **characterised in that** the package (10) is composed of a primary packaging (32) and/or a secondary packaging (38) and/or a tertiary packaging.

14. Article according to claim 13, **characterised in that** the coding means (17) and/or the marking means (14) and/or the marking (23) are arranged on the primary packaging (32) and/or the secondary packaging (38) and/or the tertiary packaging in such a way that they can be clearly identified from the outside.

15. Article according to claim 14, **characterised in that** the marking (23) at least on the secondary packaging (38) is designed as a link number (39), wherein the link number (39) can be generated from the coding means (17), and/or the marking means (14) and/or the marking (23) of the primary packaging (32).

16. Article according to any one of claims 2 to 15, **characterised in that** the random pattern is a gap width and/or an overlap region and/or a contact region (29) of joint surfaces and/or a joint seam (25) and/or a wave pattern (28) of a joint seam and/or folds (30) and/or cut edges or the like of the packaging.

17. Method for the individual marking of articles, in particular packages (10), with an individual marking means (14), **characterised by** the steps of:
- labelling the article with a random identifier (15) peculiar to the article, namely a random pattern consisting of a distribution of luminophores (16), as a marking means (14),
- detection of a random identifier (15) peculiar to the article, in particular to the package (10),
- conversion of the random identifier (15) to an individual marking (23), and
- filing of the marking (23) as a data record in a data bank (43) and/or deposition as print on the article, in particular on the package (10).

18. Method according to claim 17, **characterised in that** a packaging is labelled.

19. Method according to claim 17 or 18, **characterised in that** conversion is effected by means of a suitable mathematical function.

20. Method according to any one of claims 17 to 19, **characterised in that** the marking (23) is coded before printing on the package (10) or before filing in the data bank (43).

21. Method according to any one of claims 17 to 20, **characterised in that** the marking (23) is compressed before filing in the data bank (43).

22. Method according to any one of claims 17 to 21, **characterised in that** the random identifier (15) is detected optically.

23. Method according to any one of claims 17 to 22, **characterised in that** the random distribution of luminophores (16) is made visible with UV light, coded numerically and stored as the random identifier (15).

24. Method according to any one of claims 17 to 23, **characterised in that** the package (10) is additionally provided with an individual coding means (17), in particular a serial number (18).

25. Method according to claim 24, **characterised in that** at least the marking means (14) and the coding means (17) are combined into a data pair and put in a predetermined, reproducible reference relationship to each other.

26. Method according to claim 25, **characterised in that** the data pairs are in each case correlated with each other and filed in a data bank (43).

27. Method according to any one of claims 24 to 26, **characterised in that** provision of the package (10) with the coding means (17) and/or the marking means (14) and/or the marking (23) takes place optionally on-line or off-line.

28. Method according to any one of claims 24 to 27, **characterised in that** the marking means (14), the coding means (17) and the marking (23) are optionally applied to a primary packaging (32) and/or a secondary packaging (38) and/or a tertiary packaging or attached to one of them.

29. Method for the identification of articles, in particular packages (10), which are provided with an individual marking means (14), by detection and evaluation of the marking means (14), **characterised by** the steps of:
- detection of a random identifier (15) peculiar to the article, in particular to the package (10), as a marking means (14), wherein the random identifier (15) is rendered visible by irradiation with light in the ultraviolet spectral range and detected optically,
- conversion of the random identifier (15) to an individual marking (23), and
- alignment of the marking (23) with print of the marking (23) on the article, in particular on the package (10), and/or a data record filed in a data bank (43) and containing the marking (23).

30. Method according to claim 29, **characterised in that** conversion is effected by means of a suitable mathematical function.

31. Method according to claim 29 or 30, **characterised in that** the random identifier (15) is scanned, wherein the associated marking (23) is determined from the scanned information and compared with print applied to the package (10) and/or a data record filed in a data bank (43).

32. Method according to any one of claims 29 to 31, **characterised in that** in addition a coding means (17) arranged on the package (10), in particular a serial number (18), is detected.

33. Method according to claim 32, **characterised in that** a data pair which is composed of coding means (17) and marking means (14) and which is formed from the information detected is compared with a data pair filed in the data bank (43).

34. Device for the individual marking of articles, in particular packages (10), with an individual marking means (14), **characterised in that** a means (41) is provided for detecting at least one random identifier (15) peculiar to the article, in particular to the package (10), as a marking means (14), a means (42) for generating and displaying or outputting a marking (23) from the random identifier (15), and a means for filing or depositing the marking (23).

35. Device according to claim 34, **characterised in that** in addition a means for applying the random identifier (15) is provided.

36. Device according to claim 34 or 35, **characterised in that** the means for deposition or filing includes a printer (45) or the like and/or a storage means, in particular a data bank (43).

37. Device according to any one of claims 34 to 36, **characterised in that** in addition a means for applying a coding means (17) is provided, wherein the means for applying the coding means (17) can be identical with the printer (45) for depositing the marking (23).

38. Device according to any one of claims 34 to 37, **characterised in that** in addition means (44) are provided for coding the marking (23).

39. Device according to any one of claims 34 to 38, **characterised in that** all means (41, 42, 43, 44, 45) of the device (40) are operatively connected to each other, for which purpose the means (41 to 45) are preferably linked together.

40. Device for the identification of articles, in particular packages (10), provided with an individual marking means (14), **characterised in that** a means (41) is provided for detecting at least one random identifier (15) peculiar to the article, in particular to the package (10), as a marking means (14), and a means (42) for generating and displaying or outputting a marking (23) from the random identifier (15).

41. Device according to claim 40, **characterised in that** the means (41) is designed to emit UV light and pick up the information which is rendered visible.

42. Device according to claim 40 or 41, **characterised in that** in addition the means (41) is designed to detect further information located on the package (10), in particular the marking (23) and a coding means (17).

43. Device according to any one of claims 40 to 42, **characterised in that** the means (42) is designed to carry out mathematical functions, in such a way that the random identifier (15) can be converted to the marking (23).

44. Device according to any one of claims 40 to 43, **characterised in that** in addition a means (44) is provided for decoding the marking (23).

45. Device according to any one of claims 40 to 44, **characterised in that** the means (41, 42, 44) are connected to a storage means, in particular a data bank (43).

46. Device according to claim 45, **characterised in that** all means (41 to 44) are operatively connected to each other, wherein the means (41 to 44) are preferably linked together.

47. Device according to any of claims 40 to 46, **characterised in that** the device (40) is designed as a mobile hand-held device.

## Revendications

1. Objet, qui est doté d'un moyen (14) de caractérisation individuel en vue de son identification, le moyen de caractérisation (14) étant un moyen aléatoire de reconnaissance (15) propre à l'objet, **caractérisé en ce que** le moyen aléatoire de reconnaissance (15) est formé par au moins un motif aléatoire formé par une distribution d'éléments luminescents (16).

2. Objet selon la revendication 1, **caractérisé en ce que** l'objet est un emballage (10).

3. Objet selon la revendication 1 ou 2, **caractérisé en ce que** le moyen aléatoire de reconnaissance (15) entre dans la constitution de l'emballage (10).

4. Objet selon l'une des revendications 1 à 3, **caractérisé en ce qu'**en plus du motif aléatoire, un signe distinctif (23), généré à partir du motif aléatoire, est disposé sur ou contre l'emballage (10).

5. Objet selon l'une des revendications 1 à 4, **caractérisé en ce que** la distribution est détectable et est enregistrable sous forme de signe distinctif (23) non codé ou codé, au choix, dans une banque de données (43) et/ou sous forme d'une impression sur l'emballage (10).

6. Objet selon la revendication 5, **caractérisé en ce qu'**en plus du motif aléatoire et/ou du signe distinctif (23), est appliqué un moyen de codage (17), notamment un numéro de série (18).

7. Objet selon la revendication 6, **caractérisé en ce que** le moyen de codage (17) est dans une relation prédéfinie et reproductible avec le moyen de caractérisation (14).

8. Objet selon la revendication 6 ou 7, **caractérisé en ce que** le moyen de codage (17) et le moyen de caractérisation (14) sont en corrélation l'un par rapport à l'autre.

9. Objet selon la revendication 8, **caractérisé en ce que** la corrélation est établie par mémorisation.

10. Objet selon la revendication 8 ou 9, **caractérisé en ce que** la corrélation est établie au moyen d'une fonction de codage.

11. Objet selon l'une des revendications 1 à 10, **caractérisé en ce que** le moyen aléatoire de reconnaissance (15) fait partie intégrante de l'emballage (10) lui-même.

12. Objet selon l'une des revendications 1 à 11, **caractérisé en ce que** le moyen aléatoire de reconnaissance (15) est disposé, au choix, sur la totalité de l'emballage (10) ou dans une région définie de l'emballage (10).

13. Objet selon l'une des revendications 1 à 12, **caractérisé en ce que** l'emballage (10) est constitué d'un emballage principal (32) et/ou d'un emballage secondaire (38) et/ou d'un emballage tertiaire.

14. Objet selon la revendication 13, **caractérisé en ce que** le moyen de codage (17) et/ou le moyen de caractérisation (14) et/ou le signe distinctif (23) sont disposés sur l'emballage principal (32) et/ou l'emballage secondaire (38) et/ou l'emballage tertiaire d'une manière telle, qu'ils soient identifiables sans équivoque de l'extérieur.

15. Objet selon la revendication 14, **caractérisé en ce que** le signe distinctif (23) est réalisé au moins sur l'emballage secondaire (38) sous forme d'un numéro de jumelage (39), le numéro de jumelage (39) pouvant être généré à partir du moyen de codage (17) et/ou du moyen de caractérisation (14) et/ou du signe distinctif (23) de l'emballage principal (32).

16. Objet selon l'une des revendications 2 à 15, **caractérisé en ce que** le motif aléatoire est constitué par une largeur d'interstice et/ou une zone de recouvrement et/ou une zone de contact (29) de surfaces de jonction et/ou un joint d'assemblage (25) et/ou un motif d'ondulations (28) d'un joint d'assemblage et/ou des plis (30) et/ou des bords coupés ou analogues, de l'emballage.

17. Procédé de caractérisation individuelle d'objets, notamment d'emballages (10), comportant un moyen (14) de caractérisation individuel, **caractérisé par** les étapes de :
- caractérisation de l'objet avec un moyen aléatoire de reconnaissance (15) propre à l'objet, à savoir un modèle aléatoire formé par une répartition d'éléments luminescents (16), en tant que moyen de caractérisation (14),
- détection du modèle aléatoire propre à l'objet, en particulier de l'emballage (10),
- conversion du moyen aléatoire de reconnaissance (15) en un signe distinctif individuel (23), et
- enregistrement du signe distinctif (23), sous forme d'un groupe de données, dans une banque de données (43) et/ou sous forme d'une impression sur l'objet, notamment l'emballage (10).

18. Procédé selon la revendication 17, **caractérisé en ce qu'**un emballage est l'objet de la caractérisation.

19. Procédé selon la revendication 17 ou 18, **caractérisé en ce que** la conversion s'effectue au moyen d'une fonction mathématique appropriée.

20. Procédé selon l'une des revendications 17 à 19, **caractérisé en ce que** le signe distinctif (23) est codé avant l'impression sur l'emballage (10), ou avant l'enregistrement dans la banque de données (43).

21. Procédé selon l'une des revendications 17 à 20, **caractérisé en ce que** le signe distinctif (23) est comprimé avant l'enregistrement dans la banque de données (43).

22. Procédé selon l'une des revendications 17 à 21, **caractérisé en ce que** le moyen aléatoire de reconnaissance (15) est détecté par voie optique.

23. Procédé selon l'une des revendications 17 à 22, **caractérisé en ce qu'**en tant que moyen aléatoire de reconnaissance (15), la distribution aléatoire d'éléments luminescents (16) est rendue visible avec de la lumière UV, codée en numérique et mémorisée.

24. Procédé selon l'une des revendications 17 à 23, **caractérisé en ce que** l'emballage (10) est en plus doté d'un moyen de codage individuel (17), notamment d'un numéro de série (18).

25. Procédé selon la revendication 24, **caractérisé en qu'**au moins le moyen de caractérisation (14) et le moyen de codage (17) sont réunis en un couple de données et sont mis dans une relation de comparaison mutuelle, prédéfinie et reproductible.

26. Procédé selon la revendication 25, **caractérisé en ce que** les couples de données sont chaque fois mis en corrélation l'un avec l'autre et enregistrés dans une banque de données (43).

27. Procédé selon l'une des revendications 24 à 26, **caractérisé en ce que** l'opération consistant à doter l'emballage (10) du moyen de codage (17) et/ou du moyen de caractérisation (14) et/ou du signe distinctif (23) se fait, au choix, en direct ou en différé.

28. Procédé selon l'une des revendications 24 à 27, **caractérisé en ce que** le moyen de caractérisation (14), le moyen de codage (17) et le signe distinctif (23) sont appliqués, au choix, sur un emballage principal (32) et/ou un emballage secondaire (38) et/ou un emballage tertiaire ou bien sont apposés contre l'un de ceux-ci.

29. Procédé pour l'identification d'objets, notamment d'emballages (10), dotés d'un moyen (14) de caractérisation individuel, par détection et évaluation du moyen de caractérisation, **caractérisé par** les étapes de :
- détection d'un moyen aléatoire de reconnaissance (15) propre à l'objet, notamment à l'emballage (10), en tant que moyen de caractérisation (14), le moyen aléatoire de reconnaissance (15) étant rendu visible par exposition à une lumière se trouvant dans le domaine spectral ultraviolet et étant détecté par voie optique,
- conversion du moyen aléatoire de reconnaissance (15) en un signe distinctif individuel (23), et
- comparaison du signe distinctif (23) avec une impression du signe distinctif (23) sur l'objet, notamment l'emballage (10), et/ou un groupe de données contenant le signe distinctif (23), enregistré dans une banque de données (43).

30. Procédé selon la revendication 29, **caractérisé en ce que** la conversion s'effectue au moyen d'une fonction mathématique appropriée.

31. Procédé selon la revendication 29 ou 30, **caractérisé en ce que** le moyen aléatoire de reconnaissance (15) est scanné, le signe distinctif correspondant (23) étant alors déterminé à partir des informations scannées et comparé à une impression appliquée sur l'emballage (10) et/ou un groupe de données enregistré dans une banque de données (43).

32. Procédé selon l'une des revendications 29 à 31, **caractérisé en ce qu'**un moyen de codage (17), notamment un numéro de série (18), disposé sur ou appliqué contre l'emballage (10), est détecté en plus.

33. Procédé selon la revendication 32, **caractérisé en ce qu'**un couple de données qui est formé à partir du moyen de codage (17) et du moyen de caractérisation (14) et qui est constitué des informations détectées, est comparé à un couple de données enregistré dans la banque de données (43).

34. Dispositif pour la caractérisation individuelle d'objets, notamment d'emballages (10), comportant un moyen (14) de caractérisation individuel, **caractérisé en ce qu'**il est prévu un moyen (41) pour la détection d'au moins un moyen aléatoire de reconnaissance (15) propre à l'objet, notamment à l'emballage (10), en tant que moyen de caractérisation (14), ainsi qu'un moyen (42) pour la génération et l'indication ou la délivrance d'un signe distinctif (23) à partir du moyen aléatoire de reconnaissance (15) et un moyen pour l'enregistrement du signe distinctif (23).

35. Dispositif selon la revendication 34, **caractérisé en ce qu'**il est prévu en plus un moyen pour l'application du moyen aléatoire de reconnaissance (15).

36. Dispositif selon la revendication 34 ou 35, **caractérisé en ce que** le moyen d'enregistrement comprend une imprimante (45) ou analogue et/ou un moyen de mémorisation, notamment une banque de données (43).

37. Dispositif selon l'une des revendications 34 à 36, **caractérisé en ce qu'**il est prévu en plus un moyen pour l'application d'un moyen de codage (17), le moyen d'application du moyen de codage (17) pouvant alors être identique à l'imprimante (45) destinée à l'enregistrement du signe distinctif (23).

38. Dispositif selon l'une des revendications 34 à 37, **caractérisé en ce que** des moyens (44) pour le codage du signe distinctif (23) sont prévus en plus.

39. Dispositif selon l'une des revendications 34 à 38, **caractérisé en ce que** tous les moyens (41, 42, 43, 44, 45) du dispositif (40) sont placés en liaison de coopération les uns avec les autres, les moyens (41 à 45) étant, de préférence, réunis à cette fin entre eux en un réseau.

40. Dispositif pour l'identification d'objets, notamment d'emballages (10), dotés d'un moyen (14) de caractérisation individuel, **caractérisé en ce qu'**il est prévu un moyen (41) pour la détection d'au moins un moyen aléatoire de reconnaissance (15) propre à l'objet, notamment à l'emballage (10), en tant que moyen de caractérisation (14), ainsi qu'un moyen (42) pour la génération et l'indication ou la délivrance d'un signe distinctif (23) à partir du moyen aléatoire de reconnaissance (15).

41. Dispositif selon la revendication 40, **caractérisé en ce que** le moyen (41) est réalisé de façon à émettre de la lumière UV et à recevoir les informations rendues visibles.

42. Dispositif selon la revendication 40 ou 41, **caractérisé en ce que** le moyen (41) est réalisé en plus de façon à détecter des informations supplémentaires se trouvant sur l'emballage (10), notamment le signe distinctif (23) et un moyen de codage (17).

43. Dispositif selon l'une des revendications 40 à 42, **caractérisé en ce que** le moyen (42) est réalisé de façon à exécuter des fonctions mathématiques d'une manière telle, que le moyen aléatoire de reconnaissance (15) puisse être converti en le signe distinctif (23).

44. Dispositif selon l'une des revendications 40 à 43, **caractérisé en ce qu'**il est en plus prévu un moyen (44) pour le décodage du signe distinctif (23).

45. Dispositif selon l'une des revendications 40 à 44, **caractérisé en ce que** les moyens (41, 42, 44) sont reliés à un moyen de mémorisation, notamment une banque de données (43).

46. Dispositif selon la revendication 45, **caractérisé en ce que** tous les moyens (41 à 44) sont mis en liaison de coopération les uns avec les autres, les moyens (41 à 44) étant, de préférence, réunis à cette fin entre eux en un réseau.

47. Dispositif selon l'une des revendications 40 à 46, **caractérisé en ce que** le dispositif (40) est conçu sous forme d'un appareil portatif mobile.
